# EUROPEAN PATENT APPLICATION

(11) **EP 2 012 264 A1**
(43) Date of publication of application: **07.01.2009**
(21) Application number: 08103601.4
(22) Date of filing: 17.04.2008
(51) Int. Cl.: G06Q 10/00, G08G 1/123

(54) **Vehicle distribution system**

(30) Priority: 22.06.2007 NL 1034025
(71) Applicant: Schimmelpenninck, Laurens Maria, 1018 EJ Amsterdam (NL)
(72) Inventor: Schimmelpenninck, Laurens Maria, 1018 EJ Amsterdam (NL)
(74) Representative: Uittenbogaart, Gustaaf Adolf

(57) **Abstract**

The invention concerns a vehicle distribution system with many distribution stations with a limited number of storage locations for identifying and storing vehicles such as bicycles, scooters or motor driven carts. The distribution system has user interfaces for identifying a user and establishing communication between the user and a control system which user interfaces are located in the distribution stations, vehicles and/or accessible via internet.

In accordance with the invention the control system includes a first algorithm for calculating an expected occupation of vehicles in the distribution stations based on actual occupation and the booked expected arrivals and reservations for departures, and a second algorithm for calculating a station capacity utilisation rate based on the expected occupation and occupancy limits and wherein fees and costs attributed to a user are based on the station capacity utilisation rate of the station where a trip started and/or where the trip ended.

## Description

The invention concerns a vehicle distribution system in accordance with the preamble of claim 1. Such a distribution system is known for instance from cities with bicycle distribution systems. In the known systems users often experience that a distribution station is empty when they want to hire a bicycle or that a distribution station is complete when they want to put the bicycle in the storage location. In order to overcome this disadvantage the operator redistributes vehicles from stations with too much vehicles to stations with too little vehicles. This redistribution results in considerable costs that make the continued exploitation of the vehicle distribution system expensive.

In order to overcome this disadvantage the vehicle distribution system is according to claim 1. By giving the user an advantage or a penalty depending on from which distribution station he starts or to which distribution he travels the user will choose these stations to reduce his costs and so aid the redistribution of the vehicles.

In accordance with an embodiment, the vehicle distribution system is in accordance with claim 2. In this way, the user can plan his trip in a most advantageous way or change the destination of his trip based on information shown during the trip.

In accordance with an embodiment, the vehicle distribution system is in accordance with claim 3. In this way, the capacity utilisation rate is made dependent on the changes in the occupation of the distribution station at a specific part of the day as observed over a longer period of time such as observed in the past. By including this dependency on the part of the day the occupancy rate of the distribution station has more relevance for determining the future occupation and the redistribution improves.

In accordance with an embodiment, the vehicle distribution system is in accordance with claim 4. In this way, the influence of the weather on the expected occupancy of a specific distribution station is included in the capacity utilisation rate so that the redistribution improves.

In accordance with an embodiment, the vehicle distribution system is in accordance with claim 5. In this way, a user is induced to aid in redistribution of the vehicles.

In accordance with an embodiment, the vehicle distribution system is in accordance with claim 6. In this way, a user will choose his trip in a way that contributes to redistribution of the vehicles.

In accordance with an embodiment, the vehicle distribution system is in accordance with claim 7. In this way, the capacity utilisation rate is adapted to the average actual occupation in order to include information as registered in the past.

In accordance with an embodiment, the vehicle distribution system is in accordance with claim 8. In this way, persons so inclined might earn a fee by redistributing the vehicles.

The invention also concerns a method in accordance with claim 9. In this way the setting of the control system stimulates the availability of the vehicles as both incoming and outgoing commuters can use the same vehicle.

The invention also concerns a vehicle in accordance with claim 10. In such a vehicle, the user can make a choice during his trip at which nearby distribution station he wants to end his trip.

In accordance with an embodiment in accordance with claim 11 the user can choose between the nearby distribution stations based on information concerning the different costs that arise when he ends the trip at the different stations.

Hereafter follows a description of an embodiment of the invention using a drawing. In the drawing
Figure 1 schematically shows a part of a city with components of a vehicle distribution system,
Figure 2 shows components of a control system for the vehicle distribution system of figure 1, and
Figure 3 shows in diagrams the average occupation of a distribution station and the average and expected changes in occupation.

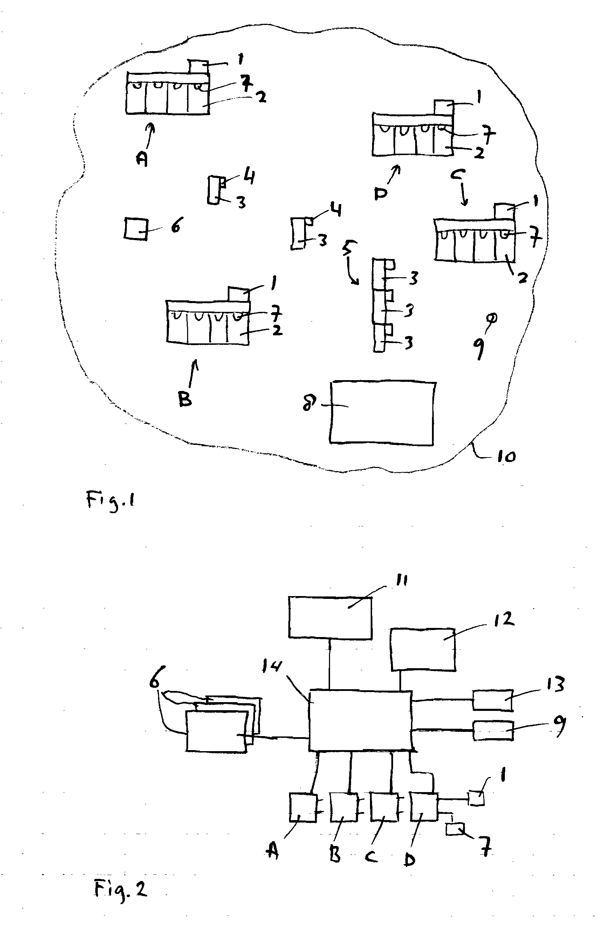

Figure 1 shows a distribution area 10 such as for instance a city centre with distribution stations A, B, C, D, ... etc. that are located at a distance of for instance a few or several hundred meters. The distribution stations A, B, C, D, ... are distributed over the distribution area 10 in such a way that most people that want to make a trip in the distribution area 10 have a distribution station A, B, C, D, ... near their point of departure and near their destination. Each distribution station A, B, C, D, ... has several storage locations 2 in which vehicles 3 can be stored and locked by a lock 7. The distribution stations A, B, C, D, ... have a control interface 1 that is connected to a control system 8. A typical distribution station for bicycles and scooters can have twenty storage locations 2.

The vehicles 3, which can be small cars, scooters, bicycles, can be stored in a distribution station A, B, C, D, ... when not in use and the identity of the vehicle 3 that the lock 7 locks in the distribution station A, B, C, D, ... is communicated to the control system 8. If a user wants to take a vehicle 3 from the distribution station, he uses the control interface 1 to communicate this to the control system 8. After the control system 8 identifies the user and payment is ensured, either via a credit account, a cash payment or in any other way, the control system 8 unlocks the lock 7 and the user can take the vehicle 3. For the duration of the use, the specific identity of the vehicle 3 is coupled to the identity of the user. The control system 8 registers the changes in the occupation of the distribution station A, B, C, D, ... administers the hire and arranges the payments.

On the vehicle 3 there can be a display 4 that is coupled to a positioning system such as a GPS so that the display 4 can be used for navigating in the distribution area 10. Also it is possible in an embodiment to indicate the nearby distribution stations A, B, C, D, ... on the display 4 and the free spaces in the nearby stations for storing the vehicle 3. In a further embodiment the display 4 shows near a specific distribution station A, B, C, D, ... the additional costs or benefit that arise when using that specific distribution station A, B, C, D, ....

The display 4 in the vehicle 3, aided by the GPS system and information stored in a memory or obtained wireless from the control system 8, can also show, intermittently for instance, information that is of importance or interest for the user such as commercial information describing shops or restaurants or tourist information describing a museum or art galleries. For this, the display 4 has a microprocessor with a wireless connection (not shown) for receiving the GPS information and for connecting to a network such as internet.

A user interface 6 allows a user to connect with the control system 8 for booking a reservation or for enquiring whether vehicles are available at specific distribution stations A, B, C, D, .... The user interface 6 can be at a dedicated station located in or near a distributions station A, B, C, D, ... or located at any other location in or near the distribution area 10 or it can even be any personal computer that connects via internet to the control system 8. For informing the control system 8 of the local weather situation there is a weather station 9 connected to the control system 8. This weather station 9 can be a temperature and/or rain sensor or it is a local weather service that supplies the desired information to the control system 8.

A transport assembly 5 can transport more than one vehicle 3 and is used for transporting vehicles 3 between the distribution stations A, B, C, D, .... The operator of the transport assembly 5 has a special user code so that he can unlock more than one vehicle 3 an place it in his transport assembly 5. After transporting the vehicles 3 he locks them in the locks 7 at the destination using his user code. The operator earns a fee that is booked to his user code when he transports the vehicles 3 from an overfull distribution station and/or to a near empty distribution station.

Figure 2 shows the various components of the control system 8. A processor 14 is connected to or is part of the distribution stations A, B, C, D, ... which have a control interface 1 and for each storage location 2 a lock 7. A system database 11 contains the historical and actual information of the distribution stations A, B, C, D, ... and the historical and actual information concerning the vehicles 3. A user database 12 contains the information of the users of the vehicles so that the users of the vehicles can be identified, for instance by using a code or an identification card, and that costs and earnings can be allocated. For making and receiving payments the processor 14 is also connected to a payment system 13. This payment system 13 is coupled to bank accounts or other credit facilities. The processor 14 is controlled in known ways using the therefore suitable programs and components and has all further required features for controlling the vehicle distribution system.

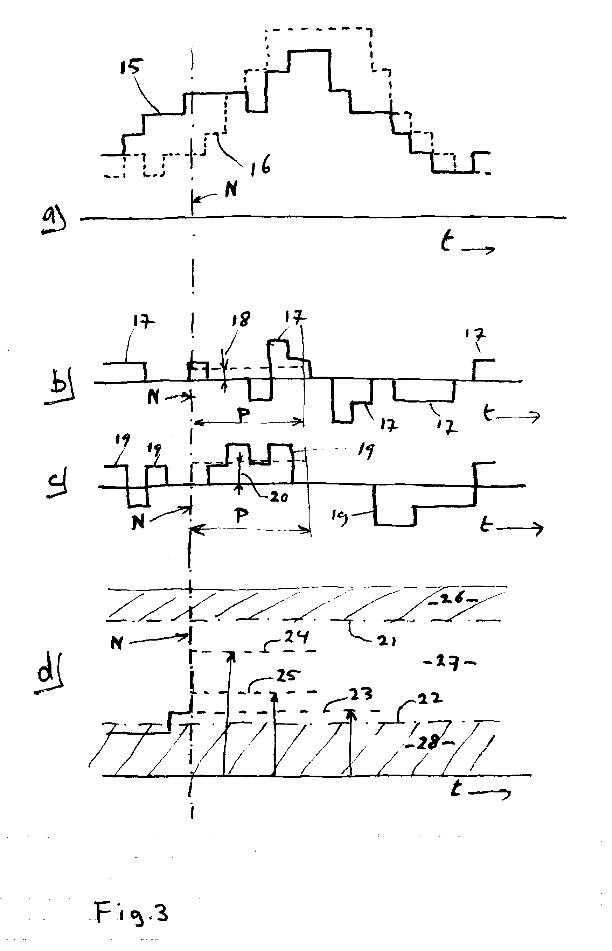

Figure 3 shows in diagram 3a with a full line 15 the average dry weather occupation of a distribution station in dependence of the time of day and day in the week. An interrupted line 16 shows the average wet weather occupation of a distribution station A,B,C,D,... in dependence of the time of day and day in the week. The diagrams in figure 3 show the average occupation or change therein of a distribution station over a short period of time, for instance for every ten to fifteen minutes, as stored in the system data base 11.

The diagram 3a shows the actual observations as stored in the station database 11 of the occupation of each distribution station A,B,C,D,... and the weather and calculated for each distribution station A,B,C,D,... for the period of time after the actual time indicated in the diagram with a stripe-dot line N.

Diagram 3b shows for the distribution station of diagram 3a with a line 17 the change in dry weather occupation, this change is based on the historical information shown with line 15 in diagram 3a. Diagram 3c shows the change in wet weather occupation, this change is based on the calculation shown with line 16 in diagram 3a. In order to use these changes in the occupation as experienced in the past for predicting the occupation at the end of a trip made by a user an average change is calculated over a time period P in the future from now, wherein this period P can be more or less equal to an average duration of a trip with a vehicle 3. In diagram 3b this average for dry weather is indicated with 18 and in diagram 3c this average for wet weather is indicated with 20.

Diagram 3d shows how based on the earlier presented diagrams a station capacity utilisation rate is calculated. Line 23 indicates the actual occupation of the distribution station and the actual occupation at this moment is referenced right of line N, which indicates the present, with the interrupted line 23. For the next period P, which can be the approximately the length of the duration of a trip with a vehicle 3, there are bookings for taking an outgoing vehicle 3 from the distribution station and booked arrivals for bringing an incoming vehicle 3 into the distribution station. A first algorithm adds the balance of the incoming vehicles and outgoing vehicles to the actual occupation to obtain an estimated occupation with bookings and expected arrivals as referenced to the right of line N with the interrupted line 25. A second algorithm determines the station capacity utilisation rate by using an upper occupation limit 21 and a lower occupation limit 22. When the estimated occupation with bookings and expected arrivals as indicated with the interrupted line 25 is higher than the upper occupation limit 21 and is in a too full area 26 the station occupation rate is too full. When the estimated occupation with bookings and expected arrivals is lower than the lower occupation limit 22 and is in a too low area 28 the station occupation rate is too low. When the estimated occupation with bookings and expected arrivals is between the upper occupation limit 21 and the lower occupation limit 22 and is in an average area 27 the station occupation rate is average.

In a further embodiment, the average occupation change for dry weather or for wet weather as indicated in the diagrams 3b and 3c are added to the estimated occupation with bookings and expected arrivals in order to obtain an estimated occupation with bookings, expected arrivals and expected occupation changes as indicated in diagram 3d with line 24. The further extended estimated occupation is used to determine the station occupation rate in the same way as previously described.

The upper occupation limit 21 and the lower occupation limit 22 can have a fixed value or can be calculated using a third algorithm based on the average dry weather occupation and/or the wet weather occupation as stored in the system database 11. This third algorithm can also adapt the length of the next period P. The third algorithm makes the changes in the upper occupation limit 21 and the lower occupation limit 22 in order to create a better match between the expected occupation and the actual occupation of a distribution station A,B,C,D,.... It will be clear that the upper occupation limit 21 and the lower occupation limit 22 will have different values for the different distribution stations A,B,C,D,....

When starting with the distribution system the upper occupation limit 21 can be set on 85% and the lower occupation limit 22 can be set at 15%. After determining what the influence of the additional fees and costs on preventing an empty or a complete distribution station has been, the control system 8 can decide in a self learning process to increase the influence of the additional fees and costs by changing one or both occupation limits 21,22. After a longer period of use the occupation limits 21,22 will get more or less constant values. Based on the difference these values it is possible to determine in a further algorithm whether the distribution station has enough storage locations 2.

The aforementioned description was of an embodiment wherein the occupation of the distribution stations is registered in periods of ten to fifteen minutes. In another embodiment, each day is divided in ten time zones: early morning, morning rush hour, morning, noon, afternoon, evening rush hour, early evening, evening, early night and night. These seventy time zones for each distribution station start with fixed times for start and stop of each time zone. In a self learning process the length of the subsequent time zones is changed in order to create time zones with more or less constant properties. In this embodiment, the self learning process determines for the various time zone at the different weather conditions what the average change in occupation is.

The operation of the vehicle distribution can be summarized as follows. The control systems 8 determines for each distribution station A,B,C,D,... the station occupation rate and presents this information to users on the displays 4, control interfaces 1, user interfaces 6 and/or makes it available via internet. The user database 12 has all required information of a user and there is a protocol for registering new users. After registering the users the variable costs for using a vehicle 3 can be attributed to a user after returning the vehicle 3 and if a vehicle 3 is not returned or is damaged the latest known user can be held responsible and the costs can be deducted from his account.

A user may go to a distribution station A,B,C,D,... and take a vehicle 3 without an advance booking or he can make an advance booking. If he makes an advance booking, he can choose one of the nearby distribution stations based on the station occupation rate and go to that station. In addition, he can decide to reserve a storage location 2 at his destination so that he is sure that he can leave the vehicle 3 at that station. He can choose his destination based on the station occupation rates of the distribution stations in the area near his destination so that he reduces his cost of using the vehicle 3.

During his trip the user sees the station occupation rates of the distribution stations nearby the vehicle 3 on the display 4 and he can change his mind concerning his destination based on this information during his trip and can so reduce his costs of hire. In this way the users are stimulated to depart from distribution stations with a station occupation rate that is too high and to go to distribution station with a station occupation rate that is too low. As these occupation ratings are based in part on bookings and/or on past changes in the occupation of the particular station, preferably taking into account the weather situation, occupation rates of the stations are adapted to the most likely situation that the user will find when arriving at a distribution station and surprises are avoided.

For distributions stations near public transport stations such as a train station it is advantageous to stimulate certain users to come early with a vehicle to the distribution station in the morning and leave a vehicle in the station and to leave late in the afternoon or early evening. A second user can be stimulated leave later in the morning and return earlier at the end of the afternoon. In this way, the second user arriving with public transport in the distribution area 10 can use a vehicle that is left by the first user who has left the distribution area with public transport earlier and when the second user returns the used vehicle early the first user returning to the distribution area 10 can use this vehicle. In this way, two users use the same vehicle. To stimulate this efficient use additional fees or additional costs can be allocated for use of the vehicles. As an example a reduced fee can be calculated for bringing a vehicle before a certain time to the distribution station and to take it out of the station after a certain time in a day. It is also possible to make special subscription agreements with users that in this way make efficient use fof the public transport system without leaving vehicles near the station.

## Claims

1. Vehicle distribution system comprising distribution stations (A, B, C, D, ...) in a distribution area (10) wherein each distribution station has a limited number of storage locations (2) for identifying and storing user operated vehicles (3) such as bicycles, scooters or motor driven carts, each storage location and/or each vehicle having a lock (7) for locking the vehicle in the storage location, the distribution system further comprising user interfaces (1,6) for identifying a user and establishing communication between the user and a control system (8) which user interfaces are located in the distribution stations, vehicles and/or accessible via internet **characterized in that** the control system (8) includes a first algorithm for calculating an expected occupation (25) of vehicles in the distribution stations (A,B,C,D...) based on actual occupation and the booked expected arrivals and reservations for departures, and a second algorithm for calculating a station capacity utilisation rate based on the expected occupation (25) and occupancy limits (21,22) and wherein fees and costs attributed to a user are based on the station capacity utilisation rate of the station where a trip started and/or where the trip ended.

2. Vehicle distribution system in accordance with claim 1 wherein the user interfaces (1,6) show the station capacity utilisation rate(s) to users prior and/or during the use of the vehicle (3).

3. Vehicle distribution system in accordance with claim 1 or 2 wherein the first algorithm also uses changes in the average occupation (18;20) of a distribution station (A, B, C, D, ...).

4. Vehicle distribution system in accordance with claim 1, 2 or 3 wherein the first algorithm also uses the actual weather condition and/or changes therein and/or combined with historic weather information.

5. Vehicle distribution system in accordance with one of the previous claims wherein the capacity utilisation rate of a distribution station (A, B, C, D, ...) can be too low, average or too high and wherein the user has a reduced payment or receives a fee if he departs from a distribution station with a capacity utilisation rate that is too high or arrives at a distribution station with a capacity utilisation rate that is too low.

6. Vehicle distribution system in accordance with one of the previous claims wherein the capacity utilisation rate of a distribution station (A, B, C, D, ...) can be too low, average or too high and wherein the user pay additionally if he departs from a distribution station with a capacity utilisation rate that is too low or arrives at a distribution station with a capacity utilisation rate that is too high.

7. Vehicle distribution system in accordance with one of the previous claims wherein the control system (8) includes a third algorithm for adapting the occupancy limits (21,22) in dependence of the average actual occupation (15;16).

8. Vehicle distribution system in accordance with one of the previous claims wherein a user can use a transport assembly (5) to transport several vehicles (3) and receive a fee payment when transporting several vehicles from a distribution station (A,B,C,D,...) rated too low and/or to a distribution station rated too high.

9. Method of using a vehicle distribution system with a control system (8) wherein a user can store a vehicle (3) in a distribution station (A, B, C, D...) , which can be located near a public transport station, and remove the vehicle wherein the control system (8) charges a reduced tariff if a user arrives before a certain time in the morning, leaves after a certain time in the afternoon or does both on the same day or a user leaves after a certain time in the morning, arrives before a certain time in the afternoon or does both.

10. Vehicle for use in a vehicle distribution system wherein the user operated vehicle (3) comprises a display (4) connected to a positioning system so that the display can show nearby distribution stations (A, B, C, D...).

11. Vehicle in accordance with claim 10 wherein the display (4) has a wireless connection with the control system (8) of the vehicle distributions system and the display (4) shows the capacity utilisation rates and/or the various fees or costs of using a nearby distribution stations (A, B, C, D...).
